# EUROPEAN PATENT SPECIFICATION

(11) **EP 0 409 860 B1**
(45) Date of publication and mention of the grant of the patent: **24.03.1993**
(21) Application number: 89904103.2
(22) Date of filing: 16.03.1989
(51) Int. Cl.: B29C 67/22

(54) **MANUFACTURE OF FOAMED SEAT CUSHIONS**
HERSTELLUNG VON SCHAUMSTOFFSITZPOLSTERN
FABRICATION DE COUSSINS DE SIEGE EN MOUSSE

(30) Priority: 17.03.1988 GB 8806327
(43) Date of publication of application: 30.01.1991
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: PURSER, Brian, Ernest, Thorpe Bay Essex (GB)
(74) Representative: Messulam, Alec Moses
(86) International application number: PCT/GB89/00283
(87) International publication number: WO 89/08547

## Description

This invention relates to the manufacturer of foamed seat cushions, in particular cushions made of polyurethane foam.

It is known to manufacture foamed seat cushions in a female mould. A sheet of impervious fabric is introduced into the mould cavity to form the seat cavity, and vacuum is used to hold the seat cover in place against the cavity wall. An in situ foaming processing then used to fill the mould cavity behind the cover with a foam which adheres to the back surface of the cover. A lid is applied to the mould whilst the foaming reaction takes place. A process of this type is disclosed in GB-PS 1 325 622.

After foaming has been completed, the finished cushion is extracted from the mould with the foam bonded directly to the inner surface of the cover sheet. In order to give the foam the required resilience, it is normal practice to crush the foam to break down some of the internal structure, and this is conventionally done through a mechanical squashing or squeezing process.

According to the present invention, there is provided a method of manufacturing a foamed seat cushion which comprises drawing a seat cover into a female mould by the use of vacuum, filling the seat cavity by a foamed in situ mixture whilst the cavity is closed by a lid, and applying air pressure inwardly to the cavity through the same channels as those used for applying a vacuum to hold the seat cover in place, after the foam has cured but before the foamed cushion is withdrawn from the cavity and before the lid is removed, in order to compress the cured foam.

In this way, the necessary manufacturing step of crushing the foam is carried outwit hout the removing the cushion from the mould and merely by reversing the pressure applied to the mould.

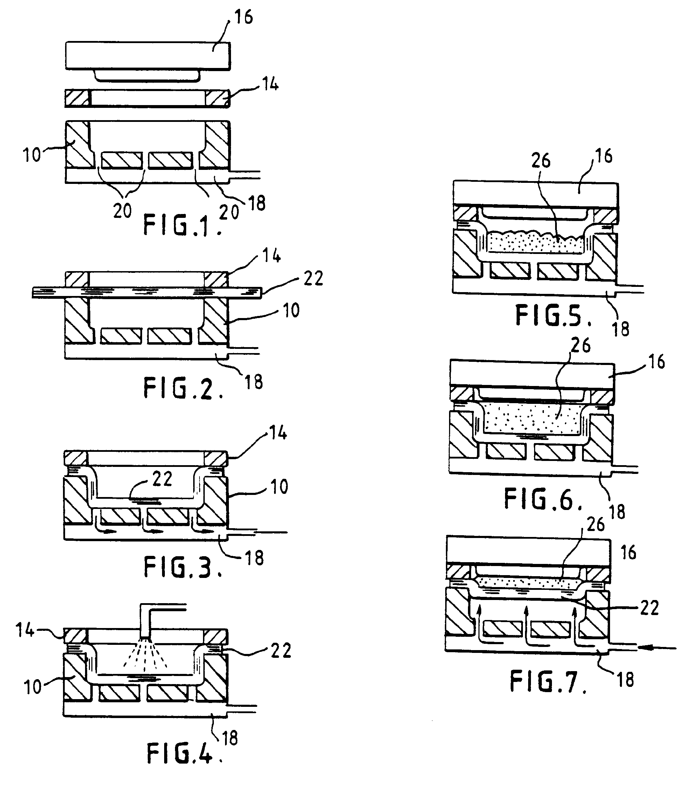

The invention will now be further described, by way of example, with reference to the accompanying drawing in which Figures 1 to 7 show sequential operating steps in the process according to the invention.

Figure 1 shows a mould 10 with a mould cavity 12, a cloth clamping ring 14 and a lid 16 in exploded view. At the bottom of the mould cavity there is a pressure chamber 18 which communicate with the cavity through apertures 20.

A piece of cloth 22 is clamped to the top of the mould by the cloth clamping ring 14 and then (Figure 3) vacuum is applied to the pressure chamber 18 to draw the cloth into the cavity so that it lines the cavity. The cloth is treated so that it is substantially impervious. The clamping ring allows the cloth to be drawn into the mould as the vacuum is applied.

Next the foam chemicals are poured in the cavity, onto the cloth 22 (Figure 4). The lid 16 is put in place and the foam 26 expands to fill the cavity and to form a cushion shape.

The final stage in the process occurs in Figure 7, where a positive pressure is applied to the chamber 18. This pressure acts on the under-side (as seen in the Figure) of the cloth to compress the expanded foam which results in a break down of some of the internal structure of the foam producing a softening of the foam.

The invention thus provides a very simple and expeditious way of carrying out the necessary step of crushing the foam.

## Claims

1. A method of manufacturing a foamed seat cushion in a female mould characterised by the steps of drawing a seat cover (22) i nto t he female mould (10) by the use of vacuum, filling the seat cavity by a foamed in situ mixture (26) whilst the cavity is closed by a lid, and applying air pressure inwardly to the cavity through the same channels (20) as those used for applying a vacuum to hold the seat cover (22) in place, after the foam (26) has cured but before the foamed cushion is withdrawn from the cavity and before the lid is removed, in order to compress the cured foam.

## Patentansprüche

1. Verfahren zur Herstellung eines in einer Hohlform geschäumten Sitzkissens, gekennzeichnet durch die Schritte des Einziehens des Sitzbezuges (22) in die Hohlform (10) mit Hilfe eines Vakuums, des Füllens des Sitzhohlraumes mit einem vor Ort ausschäumenden Gemisch (26) während der Hohlraum durch einen Deckel verschlossen wird, und des Aufbringens eines pneumatischen Druckes innerhalb des Hohlraumes durch dieselben Kanäle (20) wie diejenigen, über welche das Vakuum hergestellt wurde, um den Sitzbezug (22) in seiner Lage zu halten, und zwar nach dem der Schaum (26) ausgehärtet ist, jedoch bevor das geschäumte Kissen aus dem Hohlraum entnommen wird und bevor der Deckel abgenommen wird, um so den ausgehärteten Schaum zu komprimieren.

## Revendications

1. Procédé de fabrication d'un coussin de siège en mousse expansée dans un moule femelle, caractérisé par les étapes consistant à attirer une couverture (22) de siège dans le moule femelle (10) à l'aide d'un vide, à remplir la cavité du siège d'un mélange (26) moussant in situ, pendant que la cavité est, fermée par un couvercle, et à créer une pression d'air à l'intérieur de la cavité à travers les canalisations (20) qui ont déjà été utilisées pour appliquer un vide destiné à maintenir en place la couverture (22) du siège, après que la mousse (26) a durci, mais avant que le coussin en mousse ne soit retiré de la cavité et avant que le couvercle ne soit enlevé, afin de comprimer la mousse durcie.
